(19) Europäisches Patentamt / European Patent Office / Office européen des brevets

(11) **EP 3 917 074 A1**

(12) **EUROPÄISCHE PATENTANMELDUNG**

(43) Veröffentlichungstag:
**01.12.2021  Patentblatt 2021/48**

(51) Int Cl.:
*H04L 9/08* (2006.01)   *H04B 10/70* (2013.01)
*G06N 10/00* (2019.01)

(21) Anmeldenummer: **21176322.2**

(22) Anmeldetag: **27.05.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **27.05.2020   DE 102020114242**

(71) Anmelder: **Bundesrepublik Deutschland, vertreten durch das Bundesministerium des Innern, Vertreten durch das Bundesamt für Sicherheit 53175 Bonn (DE)**

(72) Erfinder: **Plaga, Rainer 80797 München (DE)**

(74) Vertreter: **Valvoda, Jakob Boehmert & Boehmert Anwaltspartnerschaft mbB Pettenkoferstrasse 22 80336 München (DE)**

(54) **VERFAHREN ZUR FESTSTELLUNG EINER QUANTENMECHANISCHEN VERSCHRÄNKUNG**

(57) Die vorliegende Erfindung bezieht sich auf ein Verfahren zum Feststellen einer Verschränkung zwischen einem ersten Quantensystem an einem ersten Ort und einem zweiten Quantensystem an einem zweiten Ort, der vom ersten Ort beabstandet ist, wobei das Verfahren umfasst: Messen des ersten Quantensystems in einer Messbasis ab einem Startzeitpunkt und während einer ersten Zeitspanne, Messen des zweiten Quantensystems in der Messbasis ab dem Startzeitpunkt und während einer zweiten Zeitspanne, unmittelbar nach Abschluss der ersten Messung: Übertragen des ersten Messergebnisses an den zweiten Ort und Vergleichen des ersten und zweiten Messergebnisses, und sofern das erste Messergebnis verschieden ist vom zweiten Messergebnis, Feststellen, dass die Quantensysteme verschränkt waren, anderenfalls Feststellen, dass die Quantensysteme nicht verschränkt waren.

FIG. 1

**EP 3 917 074 A1**

**Beschreibung**

TECHNISCHES GEBIET

Die vorliegende Erfindung bezieht sich auf Verfahren zum Feststellen einer Verschränkung zwischen einem ersten Qubit an einem ersten Ort und einem zweiten Qubit an einem zweiten Ort, der vom ersten Ort beabstandet ist und auf eine Vorrichtung zum Feststellen einer solchen Verschränkung.

HINTERGRUND

"Quantensysteme" sind physikalische Systeme, die für längere Zeit höchstens untereinander und mit bestimmten Kontrollsystemen der Umgebung wechselwirken. Dabei müssen sie frei von größeren Störungen durch weitere physikalische Systeme in der Umgebung sein. "Längere Zeit" bedeutet hier ausreichende Zeit um an Quantensysteme wenigstens einige kontrollierte Operationen ausführen zu können, um sie so in Zustände mit qualitativ neuartigen "Quanten-Eigenschaften" zu bringen. Die geforderte weitgehende Vermeidung von Störungen lässt sich mit der heute verfügbaren Technologie für längere Zeiträume nur für mikroskopisch kleine Systeme gewährleisten, also z.B. für einzelne Atome und Ionen in elektromagnetischen Fallen z.B. (Monz, 2011) Photonen im freien Raum z.B. (Burchhardt, 2017) oder Glasfaserkabeln, aber auch tiefgekühlte supraleitende "Josephson Kontakte" mit Abmessungen etwa im Bereich von 100 Mikrometer z.B. (Wendin, 2017). Ein Quantensystem für das nur zwei Zustände betrachtet werden wird "Qubit" genannt. Qubits sind sozusagen die generischen "Atome", aus denen alle größeren Quantensysteme zusammengesetzt sind. Sie können auch tatsächlich Atome oder eins der anderen oben genannten Quantensysteme sein.
Die beiden Zustände des Qubits werden mit sogenannten "ket" Vektoren beschrieben, dabei entspricht der Vektor |1> z.B. einem Atom das um die eigene Achse rotiert und dessen Rotationsachse nach Süden zeigt und |0> einem Atom, dessen Achse nach Norden zeigt. Qubits können sich auch in einer sogenannten Superposition von Zuständen befinden die sich immer in der Basis der |0,1> Zustände (genannt "Rechenbasis") darstellen lassen. Bestimmte derartige Superpositionen bilden insbesondere eine alternative Basis, die sogenannte "Hadamard Basis" die Qubits beschreibt, die in westliche bzw. östliche Richtung zeigen:

$$|+> = (1/\sqrt{2})(|0> + |1>); \; |-> = (1/\sqrt{2})(|0> - |1>) \qquad (1)$$

Derartige Superpositionszustände sind bereits eine Eigenschaft, die bei gewöhnlichen System nicht auftreten kann: ein klassischer makroskopischer Kreisel, der nach Ost zeigt, zeigt in keiner Weise gleichzeitig nach Nord und Süd. Ein Qubit wird vom Zustand |1> durch Anwendung des Hadamard Operators H in den Zustand |+> versetzt.
Eine weitere qualitativ neue Eigenschaft von Quantensystemen, die uns von gewöhnlichen Objekten völlig unbekannt ist, ist die Möglichkeit für eine sogenannte "Verschränkung", die Quantensystem in verschränkte Zustände versetzt. Sie bildet die Grundlage für viele "Quantentechnologien der 2. Generation" wie z.B. manchen Protokollen der Quantenkryptographie, dem Quantenrechnen und dem Erfindungsgegenstand.
Die einfachsten verschränkten Zustände für zwei Qubits sind die vier sogenannten "Bell Zustände". Einer von ihnen ist:

$$|\psi> = (1/\sqrt{2})(|00> + |11>) = (1/\sqrt{2})(|++> + |-->) \qquad (2)$$

Hier bezeichnet die erste Position im ket Vektor den Zustand des ersten der beiden Qubits und die zweite Position den Zustand des zweiten u.s.w.. Man erkennt, dass der Zustand überhaupt keine Information darüber enthält ob das Qubit sich in Zustand |0>, |1>, |+> oder |-> befindet, d.h. in welche Richtung das Qubit zeigt. Vielmehr beschreibt der Zustand nur die Korrelation der Qubits, d.h. wenn das erste Qubit nach Nord zeigt, dann auch das zweite u.s.w..
Eine besondere Operation der Verschränkung, die letztlich zu einer Aufhebung der Verschränkung eines Systems führt, ist der sogenannte "quantenmechanische Messprozess" mit dem der Zustand, in dem sich das Qubit befindet, experimentell bestimmt werden kann. Der Messprozess muss immer in einer bestimmten Messbasis, also z.B. in der Rechen- oder Hadamard Basis stattfinden. Ist das Qubit vor der Messung in einem der Basiszustände der Messbasis, dann liefert sie, als korrektes Messergebnis, den Zustand, in dem sich das Qubit vor der Messung befand. Ist das Qubit vor der Messung in der zur Messbasis orthogonalen Basis, dann findet man objektiv zufällig einen der beiden Zustände der Messbasis jeweils mit einer Wahrscheinlichkeit von 0.5. Das Qubit ist dann nach der Messung auch in dem jeweiligen Zustand der Messbasis, d.h. nicht mehr in dem Zustand, in dem es vor der Messung war.
Wird also z.B. ein Qubit im Zustand |0> in der |+,-> Basis gemessen, dann findet man entweder "|+>" oder "|->" jeweils mit einer Wahrscheinlichkeit von 0.5. Dieser zufällige Übergang in einen anderen Zustand durch Messung wird "Projektion" oder "Kollaps der Wellenfunktion" genannt. (Mit der Wellenfunktion sind hier ket Vektoren die einen räumlichen Zustand der Qubits beschreiben gemeint.) Die Projektion findet gemäß den Gesetzen der Quantenmechanik über alle Teilsysteme des verschränkten Systems statt. Wenn also ein System in dem von Gleichung (1) beschriebenen Zustand ist und das erste Teilchen in der Messbasis gemessen wird, dann befindet sich das System nach der Messung mit einer Wahrscheinlichkeit von P=0.5 entweder in dem projizierten Zustand:

$$|\psi> = |00> \quad (3),$$

oder dem Zustand:

$$|\psi> = |11> \quad (4).$$

Es wird oft angenommen, dass die Projektion alle Qubits des Systems sofort am Zeitpunkt der Messung erfasst. Wir wählen im Folgenden eine realistischere und präzisere Beschreibung, bei der sich der Kollaps mit endlicher Geschwindigkeit ausbreitet und, wie jeder physikalische Prozess, eine endliche Zeitdauer erfordert.

Bereits um 1980 wurde folgendes Protokoll diskutiert (Herbert, 1982). Seine Realisierung ist heute Routine, so bietet z.B. die Firma Qutools GmbH, München, schlüsselfertige System für seine Realisierung an.

1. Alice erzeugt zwei Qubits in einem Bell Zustand.
2. Sie sendet eins dieser Qubits an einen weit entfernten Partner Bob.
3. Alice misst ihr Qubit entweder in der |0,1> oder der |+,-> Basis.

Der verschränkte Zustand wird dadurch dann entweder in einen der unverschränkten Zustände |00> oder |11> projiziert, falls sie die Rechenbasis wählte oder, falls sie die Hadamard Basis wählte, in den Zustand |++> oder |-->. 4. Bob versucht zu messen, ob sein Qubit in einem der beiden Zustände der Rechenbasis oder der Hadamard Basis befindet. Gelingt ihm das, kann Alice ihre Entscheidung für eine der beiden Basen als klassisches Bit übermitteln, d.h. man könnte "mittels der Verschränkung" und über-lichtschnell kommunizieren. Es wurden verschieden Patente über derartige Kommunikationsmethoden erteilt (u.a. (Lofts, 2006), (Paller, 2013)). Um Informationen über den Zustand seiner Qubits zu erhalten, muss Bob sie messen.

Man erkennt, dass egal ob Bob seine Qubits in der Rechen- oder Hadamardbasis misst, er immer mit Wahrscheinlichkeit 0.5 zufällig einen der beiden Zustände der Messbasis finden wird. Mit anderen Worten: der Erwartungswert der Ergebnisse seiner Messungen ist unabhängig von Alices Wahl der Messbasis. Damit ist es Alice nicht möglich, ein Bit, dessen Wert sie bestimmt, an Bob "über die Verschränkung" zu senden ("controlled signaling", "kontrollierte Kommunikation"), d.h. die zitierten Veröffentlichungen beschreiben keine Vorrichtungen, die in der Realität zur Datenübertragung verwendet werden können. Nur der von Alice unbeeinflussbare Zufallswert kann über die Verschränkung übermittelt werden, da die Messwerte von Alice und Bob korreliert sein müssen.

Es wurden im Laufe der 1980er Jahre und danach mehrere Beweise veröffentlicht, die zeigen, dass man für ein 2-Qubit System kein Protokoll für kontrollierte über-lichtschnelle Kommunikation finden kann s. z.B. (Jordan, 1983; Bruss et al., 2000). Diese Beweise setzen aber Idealbedingungen voraus. Wir dagegen setzen realistische Bedingungen voraus. Wenn das erste Qubit eines 2-Qubit Systems in einem Bell Zustand (z.B. dem von Gleichung (1)) dann setzen wir voraus, dass die Projektion erst stattfindet, wenn die Information, welche Messbasis gewählt wurde und welches Ergebnis gefunden wurde, mit einer Geschwindigkeit $v_c \le c$ (Lichtgeschwindigkeit) zu dem anderen Untersystemen übermittelt wurde, d.h. ein Zeitintervall $d/v_c$ nach dem Zeitpunkt der Messung an dem ersten Qubit. Wir tun dies, weil gemäß der Quantenmechanik Messergebnisse nicht vorbestimmt sind. Vielmehr ist das Ergebnis der quantenmechanischen Messung des ersten Untersystems objektiv zufällig. Die Quantenmechanik beschreibt also eine Übertragung der zufälligen Information an das andere Qubit, so dass dort deterministisch das gleiche Ergebnis eintritt. Diese Übertragung kann gemäß der Relativitätstheorie aber nicht schneller als mit Lichtgeschwindigkeit "c" erfolgen.

Es ist eine grundsätzliche Aufgabe in der Quanteninformationstechnologie, Quantensysteme, die sich in einem verschränkten Zustand befinden, von Quantensystemen, die sich in einem unverschränkten sogenannten "Produkt-Zustand" befinden, durch Messungen voneinander zu unterscheiden. Zum Beispiel nehme man an, dass bekannt ist, dass sich ein Quantensystem aus zwei Qubits in einem räumlichen Abstand von d entweder in dem verschränken Bell Zustand:

$$|\psi_+> = (1/\sqrt{2})(|00> + |11>) = (1/\sqrt{2})(|++> + |-->) \quad (5)$$

oder in dem Produkt Zustand:

$$\rho_{ps} = (1/2)(|\psi_0\rangle\langle\psi_0| + |\psi_1\rangle\langle\psi_1|) \tag{6}$$

befindet. Hierbei ist:

$$|\psi_0\rangle = |00\rangle \tag{7}$$

und

$$|\psi_1\rangle = |11\rangle . \tag{8}$$

Gleichung (6) beschreibt einen Zustand, in dem die Qubits mit einer Wahrscheinlichkeit von 50% im Zustand $|\Psi_0\rangle$ und mit einer Wahrscheinlichkeit von 50% im Zustand $|\Psi_1\rangle$ sind.

Stand der Technik, diese Aufgabe zu lösen, ist es, mehrere Instanzen des Quantensystems, das sich in einem der beiden Zustände befindet, in anderen als der Rechenbasis zu messen und diese Ergebnisse lange Zeit nach den Messungen zu vergleichen. Eine Messung in der Rechenbasis ergibt in beiden Fällen entweder für beide Qubits das Ergebnis "0" oder für beide Qubits das Ergebnis "1". Misst man aber z.B. in der Hadamard Basis (Gleichung (1)), dann wird das Ergebnis für ein System im verschränkten Zustand, Gleichung (6), für beide Qubits entweder "+" oder "-" sein. Ist das System aber im unverschränkten Zustand Gleichung (7) dann besteht eine Wahrscheinlichkeit von 50% dass diese Ergebnisse anti-korreliert sind. In diesem Fall schließt man sicher, dass sich die Systeme in dem Produkt-Zustand befinden. Diese Methode beruht also darauf, dass verschränkte Systeme oft stärker Korrelationen als unverschränkte aufweisen können. Auch fortgeschrittene Methoden zum Nachweis von Verschränkung nach dem Stand der Technik, wie z.B. die sogenannten "Bell Tests" (Burchhardt, 2017) beruhen auf dem Nachweis von Korrelationen, die in verschränkten stärker als in nicht verschränkten Zuständen sind.

Leider sind derartige aus dem Stand der Technik bekannte Verfahren nicht dazu in der Lage, Verschränkung festzustellen für Zustände, deren Ergebnisse für den verschränkte und unverschränkten Zustand gleich stark korreliert sind.


ZUSAMMENFASSUNG DER ERFINDUNG

Es ist ein Ziel der vorliegenden Erfindung, ein Verfahren und eine Vorrichtung zum Feststellen einer Verschränkung zwischen einem ersten Qubit an einem ersten Ort und einem zweiten Qubit an einem zweiten Ort, der vom ersten Ort beabstandet ist und ein Verfahren zum Feststellen einer quantenmechanischen Verschränkung bereitzustellen, die ein oder mehrere der oben genannten Probleme im Stand der Technik lösen.

Ein erster Aspekt der Erfindung bezieht sich auf ein Verfahren zum Feststellen einer Verschränkung zwischen einem ersten Quantensystem an einem ersten Ort und einem zweiten Quantensystem an einem zweiten Ort, der vom ersten Ort beabstandet ist, wobei das Verfahren umfasst:

- Messen des ersten Quantensystems in einer Messbasis ab einem Startzeitpunkt und während einer ersten Zeitspanne,
- Messen des zweiten Quantensystems in der Messbasis ab dem Startzeitpunkt und während einer zweiten Zeitspanne,
- unmittelbar nach Abschluss der ersten Messung: Übertragen des ersten Messergebnisses an den zweiten Ort und Vergleichen des ersten und zweiten Messergebnisses, und
- sofern das erste Messergebnis verschieden ist vom zweiten Messergebnis, Feststellen, dass die Quantensysteme verschränkt waren, anderenfalls Feststellen, dass die Quantensysteme nicht verschränkt waren.

Vorzugsweise handelt es sich bei den Quantensystemen um Qubits.

Das Verfahren gemäß dem ersten Aspekt basiert darauf, dass das erste Messergebnis und das zweite Messergebnis verglichen werden, bevor die quantenmechanische Korrelation zwischen ersten und zweiten Quantensystem hergestellt wird. Dies wird dadurch erreicht, dass das erste Messergebnis unmittelbar nach Abschluss der ersten Messung an den zweiten Ort übertragen wird und ein Vergleichen der Messergebnisse sofort erfolgt.

Wir gehen davon aus, dass es nach dem Eintreffen der Information über das Messergebnis beim zweiten noch nicht gemessenen Qubit noch ein Zeitintervall $\Delta t_c$ dauert, bis das Gesamtsystem in den projizierten Zustand gelangt, denn physikalische Prozesse benötigen immer eine endliche Zeit. Die orthodoxe Quantenmechanik spezifiziert keine Zeitskala $\Delta t_c$, auf der gemessene Quantensysteme in einen projizierten Endzustand gelangen. Diese Zeitskala kann also sehr lange sein, wie z.B. von Wigner (Wigner, 1961) vermutet. Die Bestätigung der quantenmechanischen Vorhersagen bei Bell Tests, bei denen die Messungen an zueinander raumartigen Positionen vorgenommen wurden (z.B. Giustina et al., 2015), sind dazu nicht im Widerspruch, da sich die Zustände der klassischen Messinstrumente auch noch ändern können wenn sie sich bereits in Zuständen befinden, die einem Messergebnis entsprechen. Wenn das erste Qubit zu einer Zeit $t_m$ gemessen wird, dann wird das zweite Qubit also erst zu einer Zeit $t_p$ projiziert, für die gilt:

$$t_p = t_m + d/v_c + \Delta t_c \quad (9)$$

Hierbei ist, wie oben ausgeführt, $v_c$ die Geschwindigkeit, mit der sich die Information vom ersten zum zweiten Ort ausbreitet und d der Abstand zwischen erstem und zweitem Ort.

Werden beide Qubits zum Zeitpunkt $t_m$ gleichzeitig gemessen, so müssen beide Messungen eines der beiden möglichen Ergebnisse mit einer Wahrscheinlichkeit von P = 0.5 erhalten, da nach einer Zeit die kurz gegenüber $t_p$ - $t_m$ sein kann, ein klassisches Messgerät das Ergebnis eindeutig registrieren kann (z.B. kann ein Photomultiplier ein Photon innerhalb einiger nsec registrieren, was kürzer als $t_p$ - $t_m$ für d > O(10 m) ist.). Anders als Quantensysteme können klassische Systeme aber nicht in zwei oder mehr Zuständen gleichzeitig sein. Bevor die Projektion zum Zeitpunkt $t_p$ stattfindet, existieren also beide Ergebnisse der Messungen an den Qubits in Form zweier klassischer Systeme. Werden die Messergebnisse an den Qubits zu Zeiten t < $t_p$ verglichen, sind sie noch unkorreliert, da sie beide zufällig eintraten. Also wird bei einem derartigen Vergleich mit einer Wahrscheinlichkeit von P = 0.5 ein anti-korreliertes Ergebnis gefunden werden. Erst die Projektion des Zustands zum Zeitpunkt $t_p$ korreliert diese Messergebnisse zunächst und wählt dann eines der beiden möglichen Endergebnisse zufällig aus.

Mit andere Worten: Sofern z.B. ein gemischter Zustand von Produktzuständen vorliegt, ändert dies nichts an dem Vergleich der Messergebnisse. Da der Mischzustand eine Mischung aus den Zuständen |00> bzw. |11> war, wird ein Vergleich der Messergebnisse weiterhin immer ergeben, dass das erste Messergebnis identisch zum zweiten Messergebnis ist.

Sofern jedoch eine Verschränkung vorliegt, findet der Vergleich der Messungen statt, bevor sich die quantenmechanische Korrelation ausbreiten konnte. Somit findet man zufällig das Ergebnis "|+>" oder "|->" jeweils mit einer Wahrscheinlichkeit von 0.5. Somit kann im Fall, dass eine Antikorrelation gemessen wird, festgestellt werden, dass ursprünglich eine Verschränkung zwischen ersten und zweiten Quantensystem vorlag.

Das Verfahren gemäß dem ersten Aspekt ist somit in der Lage, verschränkte von unverschränkten Zuständen zu unterscheiden, welche mit Verfahren aus dem Stand der Technik nicht unterschieden werden konnten.

In einer ersten Ausführungsform des Verfahrens nach dem ersten Aspekt ist vorgesehen, dass das erste und zweite Quantensystem entweder

- in einem gemischten Zustand aus zwei orthogonalen Produktzuständen, in denen das erste Quantensystem und das zweite Quantensystem jeweils in einem gleichen Zustand sind, oder
- in einem gemischten Zustand aus zwei orthogonalen verschränkten Zuständen, in denen das erste Quantensystem und das zweite Quantensystem jeweils in einem gleichen Zustand sind,

vorliegen.

Bei der Messung des "klassisch" gemischten Zustands aus Produktzuständen wird ein Vergleich der Messergebnisse immer eine Korrelation feststellen.

Bei der Messung der Mischung aus verschränkten Zuständen findet jedoch der Vergleich der Messergebnisse statt, bevor sich die Korrelation ausbreiten kann. Somit wird hier mit einer Wahrscheinlichkeit von 0.5 eine Anti-Korrelation gemessen. Da die Anti-korrelation nur festgestellt werden kann, wenn eine verschränkte Superposition vorlag, kann also bei Messung der Anti-Korrelation gefolgert werden, dass ursprünglich ein verschränkter Zustand vorlag.

In einer weiteren Ausführungsform des Verfahrens nach dem ersten Aspekt ist vorgesehen, dass das Übertragen des ersten Messergebnisses an den zweiten Ort mit nahezu Lichtgeschwindigkeit mit mindestens 042*c, vorzugsweise mit mindestens 0,95*c, erfolgt. Insbesondere kann in Ausführungsformen vorgesehen sein, dass die Übertragung des ersten Messergebnisses an den zweiten Ort mit mindestens 0,5*c, mindestens 0,6*c, mindestens 0,7 *c, mindestens 0,8*c oder mindestens 0,9*c oder mindestens 0,99972 c erfolgt.

Bei Übertragung mit des ersten Messergebnisses an den zweiten Ort mit ausreichender Geschwindigkeit kann sichergestellt werden, dass ein unmittelbar nach der Übertragung des Messergebnisses stattfindender Vergleich der Messergebnisse stattfindet, bevor sich die quantenmechanische Korrelation zwischen erstem und zweiten Ort ausgebreitet hat. Hierzu soll insbesondere die Übertragung auf direkter Linie zwischen erstem und zweitem Ort erfolgen und die Ergebnisse dann unmittelbar verglichen werden. "Unmittelbar" kann hier bedeuten, dass die Ergebnisse innerhalb von 10 ns, insbesondere innerhalb von 5 ns oder 1 ns, verglichen werden.

Die Übertragung des Messergebnisses kann hierzu z.B. durch Lichtwellenleiter kostengünstig auch über große Distanzen erfolgen. Insbesondere kann der Abstand zwischen erstem und zweitem Ort wenige Meter oder sogar viele km betragen.

In einer weiteren Ausführungsform des Verfahrens nach dem ersten Aspekt ist vorgesehen, dass die zweite Zeitspanne kürzer ist als die erste Zeitspanne plus eine Dauer für die Übertragung der Messergebnisse an den zweiten Ort.

Somit können erstes und zweites Messergebnis sofort verglichen werden, sobald das zweite Messergebnis am ersten Ort eingetroffen ist.

In einer weiteren Ausführungsform des Verfahrens nach dem ersten Aspekt ist vorgesehen, dass das erste und zweite Quantensystem durch Übertragung durch ein Glasfaserkabel an die voneinander beabstandeten ersten und zweiten Orte gebracht werden und/oder wobei das Übertragen des ersten Messergebnisses an den zweiten Ort durch Vakuum erfolgt.

Das Übertragen des ersten Messergebnisses an den zweiten Ort durch Vakuum hat den Vorteil, dass eine hohe Geschwindigkeit erreicht werden kann und somit das zweite Messergebnis am ersten Ort vorliegt und die Messergebnisse verglichen werden können, bevor die quantenmechanische Korrelation eintritt.

In einer weiteren Ausführungsform des Verfahrens nach dem ersten Aspekt ist vorgesehen, dass das Feststellen, ob das erste Messergebnis verschieden ist vom zweiten Messergebnis, umfasst, die Korrelation der Messergebnisse dadurch zu bestimmen, dass ein logischer Ausgabepuls aus der Messung des ersten Quantensystems und ein Ausgabepuls aus der Messung des zweiten Quantensystems in eine schnelle Koinzidenz-Einheit eingegeben werden.

Mit einer schnellen Koinzidenz-Einheit kann der Vergleich zwischen ersten und zweiten Messergebnis besonders schnell durchgeführt werden. Somit kann sichergestellt werden, dass das Vergleichsergebnis vorliegt, bevor die quantenmechanische Korrelation eintritt.

Das Verfahren des ersten Aspekts (das im Folgenden auch als Protokoll D bezeichnet wird), kann zum Einsatz kommen, um ein neuartiges Kommunikationsverfahren bereitzustellen. Dieses neuartige Kommunikationsverfahren wird im Folgenden auch als Protokoll K bezeichnet.

Die Verfahrensschritte zum Senden mit dem Kommunikationsverfahren werden im zweiten Aspekt beschrieben und die Verfahrensschritte zum Empfangen mit dem Kommunikationsverfahren werden in dem dritten Aspekt beschrieben.

Ein zweiter Aspekt der vorliegenden Erfindung bezieht sich also auf ein Kommunikationsverfahren zum kontrollierten Senden von Informationen von einem Sender zu einem Empfänger, wobei das Verfahren umfasst:

- Versetzen von drei Quantensystemen in einen verschränkten Zustand;
- Verschicken eines zweiten und eines dritten von den drei Quantensystemen an den Empfänger; und
- um eine erste Information zu übertragen: Messen des verbleibenden ersten Quantensystems in einer ersten Basis, bzw., um eine zweite Information zu übertragen: Messen, von dem Sender, des verbleibenden ersten Quantensystems in einer zweiten Basis, die durch Hadamard-Transformation aus der ersten Basis hervorgeht.

Das Kommunikationsverfahren zum Senden von Information beruht auf der Idee, die drei Quantensysteme derart in einen verschränkten Zustand zu bringen, so dass bei Messung in der ersten Basis zwei der drei Quantensystem in einen verschränkten Zustand gebracht werden, bei Messung in der zweiten Basis hingegen in einen nicht verschränkten Gemisch-Zustand. Da dieser verschränkte Zustand mit dem oben beschriebenen Verfahren zur Feststellung einer Verschränkung von dem Gemisch-Zustand unterschieden werden kann, kann der Empfänger durch Durchführen des Feststellungsverfahrens an seinen Qubits feststellen, ob eine erste oder eine zweite Information übertragen wurde.

Vorzugsweise ist vorgesehen, dass es sich bei dem verschränkten Zustand der drei Quantensysteme um einen GHZ-Zustand handelt (Greenberger, Horne, Zeilinger, 1990).

Ein dritter Aspekt der vorliegenden Erfindung bezieht sich auf ein Kommunikationsverfahren zum kontrollieren Empfangen von Information von einem Sender, wobei das Verfahren umfasst:

- Empfangen des zweiten und dritten Quantensystems;
- Anwenden des Hadamard-Operators auf das zweite und dritte Quantensystem;
- Verwenden des Bestimmungsverfahrens nach dem ersten Aspekt, um eine Verschränkung zwischen zweiten und dritten Quantensystem festzustellen; und
- sofern eine Verschränkung festgestellt wurde: Feststellen, dass eine erste Information empfangen wurde, anderenfalls Feststellen, dass eine zweite Information empfangen wurde.

Das Kommunikationsverfahren zum kontrollieren Empfangen von Information von einem Sender ist dabei dazu konzipiert, mit dem Kommunikationsverfahren zum kontrollierten Senden von Informationen gemäß dem zweiten Aspekt zusammenzuwirken. Mit anderen Worten empfängt das Kommunikationsverfahren gemäß dem dritten Aspekt die Informationen, die mit dem Kommunikationsverfahren gemäß dem zweiten Aspekt versendet wurden.

In einer Ausführungsform des Kommunikationsverfahrens nach dem dritten Aspekt umfasst das Kommunikationsverfahren nach dem dritten Aspekt das Anwenden einer Fehlerkorrektur auf die festgestellten Informationen.

In einer weiteren Ausführungsform des Kommunikationsverfahrens nach dem dritten Aspekt umfasst das Verschicken des zweiten und dritten Quantensystems, zwei Photonen über ein Glasfaserkabel an den Sender zu verschicken.

Ein weiterer Aspekt der vorliegenden Erfindung bezieht sich auf ein Kommunikationssystem zum Übertragen von Informationen von einem Sender an einen Empfänger, wobei die Kommunikationsvorrichtung dazu ausgebildet ist, das Verfahren nach dem zweiten und dritten Aspekt auszuführen.

Insbesondere kann eine Komponente des Kommunikationssystems dazu ausgebildet sein, das Kommunikationsverfahren nach dem zweiten Aspekt auszuführen und eine weitere Komponente des Kommunikationssystems dazu ausgebildet sein, das Kommunikationsverfahren nach dem dritten Aspekt auszuführen.

In einer bevorzugten Ausführungsform des Kommunikationssystems ist vorgesehen, dass Empfänger Atom- oder Ionenfallen aufweist, die dazu ausgebildet sind, die Zustände der vom Sender empfangenen Quantensysteme in die Atom- oder Ionenfallen zu übertragen.

KURZBESCHREIBUNG DER FIGUREN

Zur besseren Veranschaulichung der technischen Merkmale von Ausführungsformen der vorliegenden Erfindung werden im Folgenden die zur Beschreibung der Ausführungsformen vorgesehenen Begleitzeichnungen kurz vorgestellt. Die beigefügten Zeichnungen in der folgenden Beschreibung sind lediglich einige Ausführungsbeispiele der vorliegenden Erfindung, Änderungen an diesen Ausführungsbeispielen sind möglich, ohne dass der in den Ansprüchen definierte Erfindungsumfang der vorliegenden Erfindung überschritten wird.

FIG. 1    ist eine schematische Illustration eines erfindungsgemäßen Verfahrens zum Feststellen einer Verschränkung zwischen zwei Quantensystemen, und

FIG. 2    eine schematische Illustration eines erfindungsgemäßen Verfahrens zum kontrollieren Kommunizieren.

DETAILLIERTE BESCHREIBUNG DER AUSFÜHRUNGSBEISPIELE

Die vorstehenden Beschreibungen sind nur Ausführungsformen der vorliegenden Erfindung, der Anwendungsbereich der vorliegenden Erfindung ist nicht darauf beschränkt. Jegliche Variationen oder Ersetzungen können leicht durch fachkundige Personen vorgenommen werden. Daher sollte der Schutzumfang der vorliegenden Erfindung dem Schutzumfang der beigefügten Ansprüche unterliegen.

Grundlagen

Im Folgenden sollen zuerst die Notation und einige Grundlagen vorgestellt werden. Die Darstellung erfolgt dabei auf Basis von abstrakten Qubits. Für eine Erklärung aller hier verwendeten Qubit Operationen siehe zum Beispiel Kapitel 10.1 von (Nielsen & Chuang, 2001).

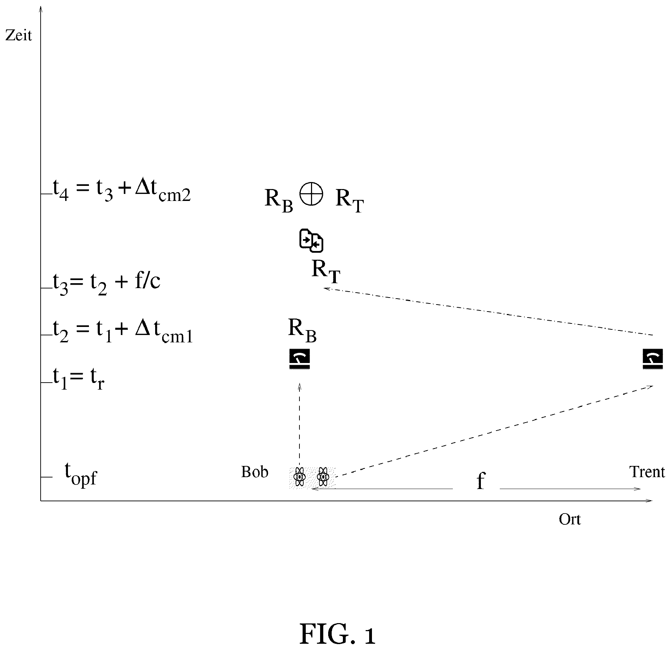

FIG. 1 ist eine schematische Darstellung von Protokoll D. Die Atomsymbole stehen für Qubits, die Messsymbole für quantenmechanische Messungen, die Vergleichssymbole für einen schnellen Vergleich zwischen den Messergebnissen von Bob und Trent. Die gestrichelten Linien stehen für den Weg der Qubits, die strichpunktierte Linie steht für den Weg der Nachricht des Messergebnisses von Trent an Bob. Zur Vereinfachung wurde angenommen, dass $\Delta t_{cm1} = \Delta t_{cm3}$.

Das Verfahren soll im Folgenden im Detail beschrieben werden:

Zu einer Zeit $t_{opf}$ liegen ein oder mehrerer Instanzen zweier Qubits vor, die sich entweder in einem bekannten verschränkten oder unverschränkten Zustand befinden. Aufgabe ist es zu entscheiden in welchem der beiden Zustände sich die Qubits befinden. Konkret kann das Protokoll z.B. den aus verschränkten Zuständen gemischten Zustand:

$$\rho_{vs} = (1/2)(|\psi+><\psi+| + |\psi-><\psi-|) \quad (10)$$

von dem aus unverschränkten Zuständen gemischten Zustand

$$\rho_{ps} = (1/2)(|\psi_0\rangle\langle\psi_0| + |\psi_1\rangle\langle\psi_1|)$$

(Gleichung (6)) unterscheiden. Dabei ist:

$$|\psi_-\rangle = (1/\sqrt{2})(|00\rangle - |11\rangle) \quad (11).$$

Das Protokoll ist schematisch in Abb. 1 dargestellt.

**"Protokoll D"**

1. Zu einer Zeit $t_{opf}$ sendet Bob eins seiner beiden Qubits zu seinem Assistenten Trent, der sich in einer räumliche Distanz f von ihm befindet. Trent erhält dieses Qubit zum Zeitpunkt $t_r$.

2. Trent misst sein Qubit in der Basis $|0,1\rangle$ ab dem Zeitpunkt $t_r$ und innerhalb der Zeitperiode $\Delta t_{cm1}$ und sendet das Messergebnis $R_T$ über einen klassischen, konventionellen Kanal sofort mit möglichst hoher Geschwindigkeit und auf möglichst direkter räumlicher Linie an Bob.

3. Bob misst sein Qubit in der Basis $|0,1\rangle$ auch ab dem Zeitpunkt $t_r$ und innerhalb der Zeitperiode $\Delta t_{cm3}$ und erhält das Messergebnis $R_B$. Es sollte möglichst $\Delta t_{cm3} < \Delta t_{cm1} + f/c$ gelten.

4. Bob erhält Trents Messergebnis zum Zeitpunkt $t_r + \Delta t_{cm1} + f/c$ und ermittelt dann sofort innerhalb einer Zeitperiode $\Delta t_{cm2}$ die Korrelation $K = R_B \oplus R_T$.

5. Wenn die Ergebnisse anti-korreliert sind (d.h. Bob und Trent finden unterschiedliche Messergebnisse, K=1), schließen sie, dass die Qubits im Zustand $\rho_{vs}$ waren. Sind sie korreliert (K=o) so schließen sie, dass die Qubits im Zustand $\rho_{ps}$ waren.

Protokoll D beruht darauf, dass Bob die Verschränkung der Systeme im Zustand $|\Psi_+\rangle$ (Gleichung (5)) bzw. $|\Psi_-\rangle$ (Gleichung (11)) dadurch feststellt, dass Bob sein und Trents Messergebnisse vor dem Zeitpunkt

$$t_p = t_r + f/v_c + \Delta t_c \qquad\qquad (9)$$

gemäß der obigen Analyse mit P = 0.5 anti-korreliert findet. Aus dieser Anti-Korrelation kann Bob mit Sicherheit schließen, dass eine Verschränkung vorlag, weil die Ergebnisse andernfalls (d.h. für die Zustände $|\Psi_0\rangle$ (Gl. (7)) und $|\Psi_1\rangle$ (Gleichung (8)) immer korreliert sind. Vorausgesetzt dass Trent und Bob gleich lange für ihre Messung benötigen ($\Delta t_{cm1} = \Delta t_{cm3}$) funktioniert das Protokoll wenn $\Delta t_{cm1} + \Delta_{cm2} < (f/v_c - f/c)$ oder/und $\Delta t_{cm1} + \Delta_{cm2} << \Delta t_c$, weil dann der Vergleich der Messergebnisse von Trent und Bob noch vor ihrer Korrelation stattfindet.

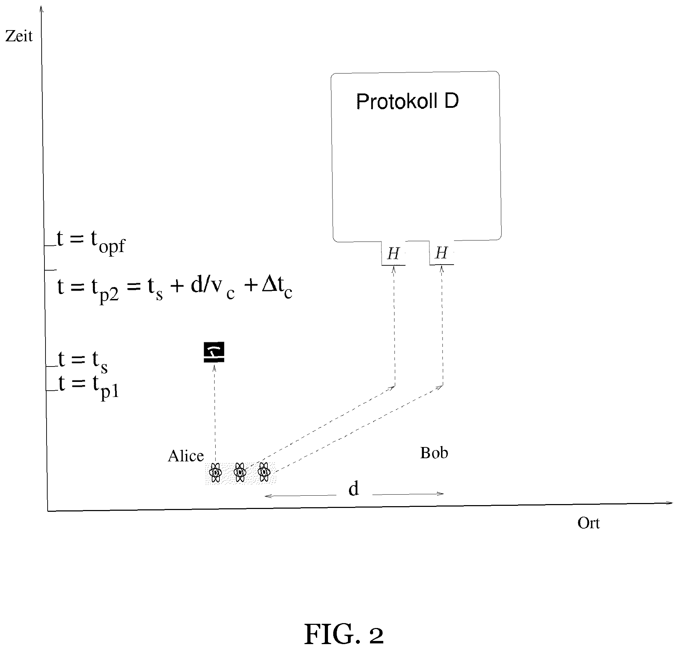

Das Protokoll D kann zum Einsatz kommen zum Beispiel bei einem Verfahren zur kontrollierten Kommunikation mittels Verschränkung, im Folgenden als "Protokoll K" bezeichnet. Ein derartiges Verfahren ist schematisch in Fig. 2 illustriert. Dabei sind die verwendeten Symbole die gleichen wie in Abb.1. Das H Symbol steht für das Hadamard Gate. Der mit "Protokoll D" beschriftete Kasten symbolisiert die Ausführung von Protokoll D wie oben beschrieben.

Aufgabe des Protokolls ist es, ein von Alice kontrolliertes Bit mittels Verschränkung an Bob zu übermitteln. Das Protokoll ist schematisch in Abb. 2 dargestellt.

**"Protokoll K"**

1. Alice, die sendende Partei, versetzt drei Qubits in einen "GHZ Zustand" (Greenberger, Horne, Zeilinger, 1990):

$$|\psi_{1i}\rangle = (1/\sqrt{2})(|{+}{+}{+}\rangle + |{-}{-}{-}\rangle) = (1/2)(|000\rangle + |110\rangle + |101\rangle + |011\rangle)$$

Der erste Index am ket Symbol gibt die größte bereits ausgeführte Schrittnummer im Protokoll an.

2. Sie behält das erste Qubit und verschickt die anderen beiden Qubits an Bob, der sich in einem räumlichen Abstand d entfernt von ihr befindet. Bob erhält diese Qubits zum Zeitpunkt $t_{p1}$.

3a. Um zu einem vorher vereinbarten Zeitpunkt $t_s > t_{p1}$ das klassische Bit "0" an Bob, die empfangende Partei, mittels der Verschränkung zu senden misst Alice ihr Qubit zur Zeit $t_s$ in der Rechenbasis $|0,1>$. Dadurch wird das 3-Qubit System mit einer Wahrscheinlichkeit von jeweils 0.5 in einen von zwei projizierten Zuständen versetzt. Entweder in den Zustand:

$$|\psi_{300}> = (1/\sqrt{2})(|000> + |011>) \text{ (falls Alice eine „0" misst)},$$

oder:

$$|\psi_{301}> = (1/\sqrt{2})(|101> + |110>) \text{ (falls Alice eine „1" misst)}.$$

Erst zur Zeit $t_{p2} = t_s + d/v_c + \Delta t_c$ liegen die Qubits von Bob im Zustand $|\Psi_{300B}> = (1/\text{-}\sqrt{2})(|00> + 11>)$ (falls Alice eine das Messergebnis 0 findet) bzw. $|\Psi_{301B}> = (1/\text{-}\sqrt{2})(|01> + |10>)$ (falls Alice das Messergebnis 1 findet). Beide Zustände sind verschränkte Bell-Zustände. Der zweite Index am ket Symbol gibt den Bitwert an, den Alice sendet und der dritte Index gibt ihr Messergebnis an. Der vierte Index "B" zeigt an, dass der Zustand von Bobs beiden Qubits angegeben ist.

3b. Um zum Zeitpunkt $t_s$ das klassische Bit "1" an Bob mittels der Verschränkung zu senden misst Alice ihr Qubit in der Hadamardbasis $|+,->$. Dadurch kollabiert der Zustand mit einer Wahrscheinlichkeit von jeweils 0.5 entweder in den Zustand:

$$|\psi_{31+}> = |+++> \text{ falls Alice das Messergebnis „+" findet},$$

oder in den Zustand:

$$|\psi_{31-}> = |---> \text{ falls Alice das Messergebnis „-" findet}.$$

Zur Zeit $t_{p2}$ liegen die Qubits von Bob im Zustand $|\Psi_{31+B}> = |++>$ (falls Alice + misst) bzw. $|\psi_{31-B}> = |-->$ (falls Alice - misst).
Beide Zustände sind unverschränkt. Sie beschreiben, dass jedes der beiden Qubits nach der Messung in einem reinen Zustand ist, also entweder nach + oder - zeigt.

4. Als ersten Schritt zum Empfang von Alices Nachricht, wendet Bob zu einem Zeitpunkt $t_{p2} = t_s + d/v_c + \Delta t_c$ den Hadamard Operator H auf beide seiner Qubits an. Diese Operation ist zur Zeit $t_{opf}$ beendet.

4a. Falls Alice 0 sendet versetzt dies Bobs Qubits in den Zustand: $|\Psi_{400B}> = (1/\sqrt{2})(|00>+ |11>)$ (falls Alice 0 fand) bzw. $|\Psi_{401B}> = (1/\sqrt{2})(|00>- |11>)$ (falls Alice 1 fand). Hier liegt also in beiden Fällen ein verschränkter Zustand vor, vgl. $\rho_{vs}$.(G1.(10)). Vor dem Anwenden des Hadamard-Operators lagen Bobs Qubits auch schon in diesem Zustand vor.
Dieser Zustand ist invariant unter dem Hadamard Operator, da $(1/\sqrt{2})(|00>+ |11>) = (1/\sqrt{2}) (|++> + |-->)$. Anschaulich gesprochen beschreibt dieser Zustand sozusagen eine "vollkommene Phasen-Korrelation der beiden Qubits" ohne die Phase der einzelnen Qubits irgendwie zu bestimmen. Daran ändert die Hadamard Transformation, die ja nur in beiden Qubits die Phase um den gleichen Winkelbetrag $\pi/2$ "weiterdreht", nichts.

4b. Falls Alice 1 sendet, versetzt dies Bob Qubits in den Zustand: $|\Psi_{41+B}> = |11>$ (falls Alice + fand) bzw. $|\Psi_{41+B}> = |00>$ (falls Alice - fand). Hier liegt also ein klassisches Gemisch aus Zuständen vor, vgl. $\rho_{ps}$ wie oben definiert (Gl.(6)).

In den Schritten 5 bis 9 wird nunmehr das Protokoll D verwendet, um zu unterscheiden, ob $\rho_{vs}$ oder $\rho_{ps}$ vorliegt. Somit kann man also mit Protokoll D feststellen, ob Alice eine 0 oder eine 1 gesendet hat.
Im Einzelnen:

5. Zu einer Zeit $t_{opf}$ sendet Bob eins seiner beiden Qubits zu seinem Assistenten Trent, der sich in einer räumliche Distanz f von ihm befindet. Trent erhält dieses Qubit zum Zeitpunkt $t_r$.

6. Trent misst sein Qubit in der Basis |0,1> ab dem Zeitpunkt $t_r$ und innerhalb der Zeitperiode $\Delta t_{cm1}$ und sendet das Messergebnis $R_T$ sofort über einen klassischen, konventionellen Kanal mit Lichtgeschwindigkeit an Bob.

7. Bob misst sein Qubit in der Basis |0,1> auch ab dem Zeitpunkt $t_r$ und innerhalb der Zeitperiode $\Delta t_{cm3}$ und erhält das Messergebnis $R_B$. Es muss $\Delta t_{cm3} < \Delta t_{cm1} + f/c$ gelten.

8. Bob erhält Trents Messergebnis zum Zeitpunkt $t_r + \Delta t_{cm1} + f/c$ und ermittelt dann sofort innerhalb einer Zeitperiode $\Delta t_{cm2}$ die Korrelation K = $R_B \oplus R_T$.

9. Wenn die Ergebnisse anti-korreliert sind (d.h. Bob und Trent finden unterschiedliche Messergebnisse, K=1), schließt Bob, dass Alice "0" gesendet hat. Sind sie korreliert (K=o), so schließt er, dass Alice "1" gesendet hat.

Wir nehmen an, dass die Kriterien für eine funktionieren von Protokoll D erfüllt sind. Die Wahrscheinlichkeit ein korreliertes Ergebnis zu finden, wenn Bobs Qubits vor der Messung in einem der Zustände 4a. sind, ist dann 0.5. Die Fehlerrate bei der Übertragung des Wertes "0" ist daher 50%. Die Wahrscheinlichkeit ein anti-korreliertes Ergebnis zu finden, wenn Bobs Qubits in einem der Zustände in Schritt 4b. sind, ist immer o. Die Übertragung des Wertes "1" von Alice zu Bob über die Verschränkung ist daher fehlerfrei.

Nehmen wir an die Bit Werte "0" und "1" werden von Alice zufällig mit Wahrscheinlichkeit 0.5 gesendet. In einer Ausprägung des Verfahrens wird die Gültigkeit dieser Annahme für eine zu sendende Botschaft, z.B. einen Text in einer bestimmten Sprache, dadurch garantiert, dass der Text mit einem Verfahren der symmetrischen Kryptographie, z.B. dem AES Code, vor dem Versenden verschlüsselt und der dafür verwendete kryptographische Schlüssel, nach dem Chiffrat, versendet wird. Die Bitfehlerrate des Protokolls beträgt dann 25 %. In einer Ausprägung des Verfahrens wird ein Verfahren der klassischen Fehlerkorrektur, z.B. Reed-Solomon Codes, benutzt um eine fehlerfreie Kommunikation mit einer Wahrscheinlichkeit beliebig nahe an 1 zu gewährleisten. Die in Schritt 4. beschriebene notwendige Wartezeit von $d/v_c + \Delta t_c$ bis Alices Qbits durch Bobs Messung projiziert wurden, garantiert, dass die Informationsübermittlung durch das Protokoll nur mit einer Geschwindigkeit $< v_c \le c$ stattfinden kann.

Im Folgenden werden Ausführungsformen der Erfindung im Detail beschrieben.

Für Ausführungsformen der Erfindung ist es notwendig die Qubits in

Schritt 1. des Protokolls zunächst zu verschränken,
Schritt 2. des Protokolls dann einen Teil von ihnen von Sende zur Empfangsstation zu übermitteln und
Schritt 3. des Protokolls sie danach, möglichst auch nach einer Wartezeit $\Delta t_w$, erfolgreich auszulesen.

Voraussetzung für eine erfolgreiche Informationsübermittlung mittels der Verschränkung ist, dass die Qubits bis zu ihrer Auslese in guter Näherung in dem verschränkten Zustand bleiben, was eine gute Isolation gegenüber der Umgebung voraussetzt. Die technisch maximal erreichbare Isolation-Zeit eines Qubits wird durch sein "Dekohärenz-Zeitskala" $t_k$ quantifiziert. Während Schritt 1. für jede der oben diskutierten Qubit Realisierungen möglich ist, ist Schritt 2. eindeutig mit Photonen beim derzeitigen Stand der Technik am besten zu realisieren. $t_k$ ist für Qubits als Atom oder Ionenfallen gegenwärtig maximal etwa in der Größenordnung von etwa einer Stunde während sie für supraleitende Qubits einige Größenordnungen kleiner ist. Während dieses Zeitraums wird es kaum möglich sein, die ganze Falle über größere Distanzen zu transportieren. Verschränkte Photonen dagegen können im gegenwärtigen Stand der Technik schon via Satellit über interkontinentale Distanzen verteilt werden. Sie sind also die derzeit für Schritt 2. und dann auch Schritt 1. eine bevorzugte Ausführungsform der Erfindung.

Schritt 1 des Protokolls. Es entspricht dem Stand der Technik drei Photonen in einen GHZ-Zustand zu versetzen. Die Arbeiten von Bouwmeester et al. (1999) und Gasparoni et al. (2004) beschreiben den Bau und die Nutzung von Apparaturen, die man dafür benötigt. Die Arbeit von Hamel et al. (2014) beschreibt eine weitere Methode Photonen in den GHZ Zustand zu versetzen.

Schritt 2 des Protokolls. Ausführungsform "Nur-Photonen": Alice sendet zwei der Photonen über Glasfiberkabel an Bob. Alternativ sendet ein Satellit die verschränkten Photonen an beide Kommunikationspartner Alice und Bob. Allerdings ist es nicht möglich, die so verteilten Photonen am Empfangsort für längere Zeiten zu speichern. Man kann Photonen höchstens in Glasfiberkabel für Zeiten kleiner als eine Millisekunde speichern. $\Delta t_w$ ist damit in dieser Ausführungsform auf diese Zeitskala beschränkt.

Um Alice und Bob eine längere Zeit $\Delta t_w$ zu erlauben, ist es daher vorteilhaft den Zustand der an Bob gesandten Photonen auf in bereits bei Bob befindliche Atom-Qubits in Atom- oder Ionenfallen zu übertragen. Auf diese Weise sind wesentlich längere $\Delta t_w$ von bis zu Stunden realisierbar. Stand der Technik ist es zwei Qubits als Atome in Fallen die mehrere hundert Meter entfernt sind mittels Photonen in einen Bell-Zustand zu versetzen. Die Arbeit von Burchardt (2017) beschreibt die Techniken für einen solchen Aufbau. Ein 2-Qubit System in einem Bell Zustand über 13 km (ein Qubit in München Zentrum das andere in Garching) befindet sich derzeit im Aufbau. Eine bevorzugte Ausführung des Verfahrens ist, ein Atom- oder Ion in einer Falle als Qubit für den Sender und zwei derartige Qubits für den Empfänger mittels über Glasfaser oder Freiraumausbreitung übermittelten Photonen in einen GHZ Zustand zu versetzen. Genau dies wird in dem Aufbau von Burchardt, allerdings nur für zwei Qubits in einen Bell Zustand, gemacht. Dabei sollte die Zeitskala $t_k$ der in einer Falle gefangenen Atom-Qubits möglichst groß sein, so dass die Wartezeit möglichst groß gewählt werden kann.

Schritt 3 des Protokolls. Wenn die Zustände |0> und |1> lineare Polarisationszustände eines Photons sind dann kann man die Zustände in dieser Basis auslesen indem man das Photon durch einen Polarisationsfilter leitet und dann mit einer Avalanche-Photodiode nachweist ob es die Folie durchqueren konnte. Methoden der Messung von Ion und Atom basierten Qubits sind in Monz (2011) bzw. Burchardt (2017) beschrieben.

Schritt 4. des Protokolls. Eine experimentelle Realisierung des Hadamard Gate in ist für ein Qubit als Photon in Tipsmark et al. (2008) beschrieben.

Schritt 5. des Protokolls. Die Versendung eines photonischen Qubits des Protokolls kann durch die Luft oder ein Glasfiberkabel erfolgen.

Schritt 6. des Protokolls. Der klassische Kanal über den das Messergebnis mit Lichtgeschwindigkeit übermittelt wird, kann ein Lichtpuls sein, dessen Stärke vom Messergebnis abhängt. Er kann in einer LED Diode von Trent erzeugt werden und nach Freiraumübertragung (bei der Lichtgeschwindigkeit in sehr guter Näherung erreicht wird) mittels einer Fotozelle von Bob nachgewiesen werden.

Schritt 7. des Protokolls. Ein photonisches Qubit kann mit einem Photomultiplier gemessen werden, der Ausgabepuls kann mit einem Diskriminator zu einem logischen Ausgabepuls umgewandelt werden.

Schritt 8. des Protokolls. Die Korrelation der Messergebnisse kann von Bob dadurch ermittelt werden, dass er den logischen Ausgabepuls aus der Messung seines Qubits in Schritt 7. und aus der Bestimmung von Trents Ergebnis (oben Ausgabe der Fotozelle) in eine schnelle Koinzidenz-Einheit eingibt. K wird dann durch die Ausgabe dieser Einheit bestimmt.

In einer weiteren Ausführungsform sind bei Sender und Empfänger eine größere Anzahl N von derartigen Systemen vorhanden. Nun sendet Alice regelmäßig zu vorher vereinbarten Zeiten Signale, die von Bob alle decodiert werden. So wird eine feste Verbindung in beide Richtungen möglich. In einer Ausführung der Erfindung kann Alice einen bestimmten Bit-String senden, der von Bob als "Telefonklingel" implementiert wird.

In einer weiteren Ausführungsform werden N 3-Qubit-Systeme verwendet von denen Bob jeweils 2 Qubits erhält. Alice misst alle ihre Qubits in der gleichen Basis, um ein einziges Bit zu übertragen. Falls alle N System das Ergebnis "0" ergeben, ist Bobs Schluss daraus, dass Eve "0" gesendet hat mit einer Wahrscheinlichkeit von $P = 1-(0.5)^N$ richtig. Somit kann auch der Wert "0" in der Grenze $N \to \infty$ fehlerfrei übertragen werden.

## Anwendungen

Die Hauptvorteile der Kommunikation über Verschränkung gegenüber den bisher bekannten Methoden der Informationsübermittlung sind:

1. Es ist eine gegenüber dem Stand der Technik wesentlich und qualitativ erhöhte Informations-Sicherheit bei der Informationsübermittlung gegeben.

Diese ist mit folgendem Sicherheitskonzept gewährleistet: die Liegenschaften in denen sich die Qubits befinden müssen mit den üblichen Methoden der Abstrahl- und physikalischen Sicherheit geschützt werden. Ist die Sicherheit geben ein Abhören dieser Liegenschaften gewährleistet, dann ist ein Abhören der Kommunikation über Verschränkung prinzipiell unmöglich, da zwischen den Kommunikationspartnern nichts der gegenwärtigen Physik bekanntes ausgetauscht wird, was ein Angreifer außerhalb der Liegenschaften überhaupt angreifen könnte. Diese Schutzmechanismen machen einen hoch sicheren Austausch von Information ohne Verwendung mathematischer oder physikalischer Kryptographie oder weiterer physikalischer Schutzmechanismen zwischen den jeweiligen Liegenschaften möglich.

2. Es ist eine gegenüber dem Stand der Technik wesentlich und qualitativ erhöhte Zuverlässigkeit der Informationsübermittlung gegeben

Es ist keine natürliche Ursache für eine Blockierung oder auch nur Dämpfung des Kommunikationskanals bekannt. Daher ist ein Blockieren der Verbindung durch einen absichtlichen Versuch eines Angreifers unmöglich. Egal was zwischen den Liegenschaften passiert, wird das Signal mit der gleichen Qualität übertragen. "Denial of Service" Angriffe werden so, zumindest nach Verteilung der Qubits unmöglich.

Die Dämpfungsfreiheit des Kommunikationskanals erlaubt Kommunikation zwischen Partnern die über keinen herkömmlichen kabellosen Kommunikationskanal verfügen, der über eine ausreichend geringe Dämpfung verfügt, z.B. wenn sich einer Partner in einer tief unter der Erde oder tief unter Wasser befindet.

Die Dämpfungsfreiheit gilt auch für die Dämpfung durch Ausbreitung des Signals im Raum. Ein weit entferntes Raumfahrzeug könnte mit dem Verfahren besonders Energie sparend und über beliebig große Entfernungen zuverlässig kommunizieren.in Dies wäre z.B. für mikroskopisch kleine interstellare Raumsonden ein geeigneter Kommunikationskanal zur Erde.

3. Es ist eine gegenüber dem Stand der Technik erhöhte Geschwindigkeit der Informationsübertragung realisierbar.

Die fehlende Dämpfung erlaubt eine Ausbreitung der Signale direkt durch die Erde was bei Kommunikation über interkontinentale Distanzen abhängig vom Wert von $v_c$u.U. einen Zeitvorteil gegenüber herkömmlichen Kanälen, die der Erdkrümmung folgen müssen, bedeuten kann. Eine solche Beschleunigung könnte z.B. im computergestützten Börsenhandel von Vorteil sein.

Der Erfindung liegt die Annahme einer universellen Gültigkeit der Quantenmechanik, und der Abwesenheit von über lichtschnellen Einflüssen zu Grunde. Die Informationsübermittlung findet somit mit der Geschwindigkeit $v_c \leq c$ statt, d.h. maximal mit Lichtgeschwindigkeit. Sie steht also in keinem Widerspruch zur Gültigkeit der Relativitätstheorie.

Literatur

D.Bouwmeester et al., Observation of three-photon Greenberger-Horne-Zeilinger entanglement, Phys.Rev.Lett. 82,1345 (1999)

D.Bruß et al., Approximate quantum cloning and the impossibility of superluminal information transfer, Phys. Rev. A 62, 062302 (2000)

D.Burchardt, A Rigorous Test of Bell's Inequality and Quantum Teleportation Employing Single Atomes, Dissertation an der Ludwig-Maximilians Universität, München, (2017)

S.Gasparoni et al., Realization of a photonic CNOT gate sufficient for quantum computation, Phys. Rev. Lett. 93, 020504 (2004)

M. Giustina et al., Significant-Loophole-Free Test of Bell's Theorem with Entangled Photons, Phys. Rev. Lett. 115,250401 (2015).

D. M. Greenberger, M. A. Horne, A. Shimony, A. Zeilinger: Bell's theorem without inequalities, Am. J. Phys. 58, 1131-1143 (1990)

D.R. Hamel, Direct generation of three-photon polarization entanglement Nature Photonics 8,801-807 (2014)

N. Herbert, FLASH-A superluminal communicator based upon a new kind of quantum measurement, Found. Phys., 12, 1171-1179 (1982)

T.F. Jordan, Quantum Correlations Do Not Transmit Signals, Phys.Lett. 94A, 264 (1983)

M.Lofts, Method and System for binary signaling via Quantum Nonlocality, Patent US 7,135,700 B2 (2006)

T. Monz, Quantum information processing beyond ten ion-qubits, dissertation at the Leopold-Franzens University Innsbruck, (2011)

M. Nielsen & I. Chuang, Quantum Computation and Quantum Information, Cambridge University Press, New York, (2001)

M. S.Paller. Quantum Entanglement Comminications System, Patent US 2013/0266328 A1 (2013)

A. Tipsmark et al., Experimental demonstration of a Hadamard gate for coherent state qubits, Phys.Rev. A 84, 050301(R) (2011)

G. Wendin, Quantum information processing with superconducting circuits: a review, Rep. Prog. Phys. 80 106001 (2017)

E. Wigner, Remarks on the Mind-Body Question. In: I.J. Good (Hrsg.): The Scientist Speculates, pp. 284 - 302 (1961).

**Patentansprüche**

1. Verfahren zum Feststellen einer Verschränkung zwischen einem ersten Quantensystem an einem ersten Ort und einem zweiten Quantensystem an einem zweiten Ort, der vom ersten Ort beabstandet ist, wobei das Verfahren umfasst:

   - Messen des ersten Quantensystems in einer Messbasis ab einem Startzeitpunkt und während einer ersten Zeitspanne,
   - Messen des zweiten Quantensystems in der Messbasis ab dem Startzeitpunkt und während einer zweiten Zeitspanne,
   - unmittelbar nach Abschluss der ersten Messung: Übertragen des ersten Messergebnisses an den zweiten Ort und Vergleichen des ersten und zweiten Messergebnisses, und
   - sofern das erste Messergebnis verschieden ist vom zweiten Messergebnis, Feststellen, dass die Quantensysteme verschränkt waren, anderenfalls Feststellen, dass die Quantensysteme nicht verschränkt waren.

2. Verfahren nach Anspruch 1, wobei das erste und zweite Quantensystem entweder

   - in einem gemischten Zustand aus zwei orthogonalen Produktzuständen, in denen das erste Quantensystem und das zweite Quantensystem jeweils in einem gleichen Zustand sind, oder
   - in einem gemischten Zustand aus zwei orthogonalen verschränkten Zuständen, in denen das erste Quantensystem und das zweite Quantensystem jeweils in einem gleichen Zustand sind,

   vorliegen.

3. Verfahren nach Anspruch 1, wobei das Übertragen des ersten Messergebnisses an den zweiten Ort mit nahezu Lichtgeschwindigkeit, insbesondere mit mindestens 0,42*c, vorzugsweise mit mindestens 0,9*c, erfolgt.

4. Verfahren nach Anspruch 1, wobei die zweite Zeitspanne kürzer ist als die erste Zeitspanne plus eine Dauer für die Übertragung der Messergebnisse an den zweiten Ort.

5. Verfahren nach einem der vorherigen Ansprüche, wobei das erste und zweite Quantensystem durch Übertragung durch ein Glasfaserkabel an die voneinander beabstandeten ersten und zweiten Orte gebracht werden und/oder wobei das Übertragen des ersten Messergebnisses an den zweiten Ort durch Vakuum oder Luft erfolgt.

6. Verfahren nach einem der vorherigen Ansprüche, wobei das Feststellen, ob das erste Messergebnis verschieden ist vom zweiten Messergebnis, umfasst, die Korrelation der Messergebnisse dadurch zu bestimmen, dass ein logischer Ausgabepuls aus der Messung des ersten Quantensystems und ein Ausgabepuls aus der Messung des zweiten Quantensystems in eine schnelle Koinzidenz-Einheit eingegeben werden.

7. Kommunikationsverfahren zum kontrollierten Senden von Informationen von einem Sender zu einem Empfänger, wobei das Verfahren umfasst:

   - Versetzen von drei Quantensystemen in einen verschränkten Zustand;
   - Verschicken eines zweiten und eines dritten von den drei Quantensystemen an den Empfänger; und
   - um eine erste Information zu übertragen: Messen des verbleibenden ersten Quantensystems in einer ersten Basis, bzw., um eine zweite Information zu übertragen: Messen, von dem Sender, des verbleibenden ersten Quantensystems in einer zweiten Basis, die durch Hadamard-Transformation aus der ersten Basis hervorgeht.

8. Kommunikationsverfahren nach Anspruch 7, wobei es sich bei dem verschränkten Zustand der drei Quantensysteme um einen GHZ-Zustand handelt.

9. Kommunikationsverfahren nach Anspruch 7 oder Anspruch 8, wobei das Verschicken des zweiten und dritten Quantensystems umfasst, zwei Photonen über ein Glasfaserkabel an den Sender zu verschicken.

10. Kommunikationsverfahren zum kontrollieren Empfangen von Information von einem Sender, wobei das Verfahren umfasst:

   - Empfangen des zweiten und dritten Quantensystems;

- Anwenden des Hadamard-Operators auf das zweite und dritte Quantensystem;
- Verwenden des Bestimmungsverfahrens nach Anspruch 1, um eine Verschränkung zwischen zweiten und dritten Quantensystem festzustellen; und
- sofern eine Verschränkung festgestellt wurde: Feststellen, dass eine erste Information empfangen wurde, anderenfalls Feststellen, dass eine zweite Information empfangen wurde.

11. Kommunikationsverfahren nach Anspruch 10, weiterhin umfassend das Anwenden einer Fehlerkorrektur auf die festgestellten Informationen.

12. Kommunikationsverfahren nach Anspruch 10 oder 11, wobei das Empfangen des zweiten und dritten Quantensystems umfasst, zwei Photonen über ein Glasfaserkabel von dem Sender zu empfangen.

13. Kommunikationssystem zum Übertragen von Informationen von einem Sender an einen Empfänger, wobei die Kommunikationsvorrichtung dazu ausgebildet ist, das Verfahren nach einem der vorherigen Ansprüche auszuführen.

14. Kommunikationssystem nach Anspruch 13, wobei der Empfänger Atom- oder Ionenfallen aufweist, die dazu ausgebildet sind, die Zustände der vom Sender empfangenen Quantensystems in die Atom- oder Ionenfallen zu übertragen.

FIG. 1

Zeit

$t = t_{opf}$

$t = t_{p2} = t_s + d/v_c + \Delta t_c$

$t = t_s$
$t = t_{p1}$

Protokoll D

$H$   $H$

Alice                     Bob

d

Ort

FIG. 2

Europäisches Patentamt
European Patent Office
Office européen des brevets

# EUROPÄISCHER RECHERCHENBERICHT

Nummer der Anmeldung

EP 21 17 6322

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | GIUSTINA MARISSA ET AL: "A significant-loophole-free test of Bell's theorem with entangled photons", PROCEEDINGS OF SPIE; [PROCEEDINGS OF SPIE ISSN 0277-786X VOLUME 10524], SPIE, US, Bd. 10442, 5. Oktober 2017 (2017-10-05), Seiten 1044204-1044204, XP060095806, DOI: 10.1117/12.2277696 ISBN: 978-1-5106-1533-5 * Section 2, 3 * | 1-14 | INV. H04L9/08 H04B10/70 ADD. G06N10/00 |
| A | ZEILINGER A: "Fundamentals of quantum information", PHYSICS WORLD, BRISTOL, GB, Bd. 11, Nr. 3, 1. März 1998 (1998-03-01), Seiten 35-40, XP002290446, * das ganze Dokument * | 1-14 | |
| A,D | ANDERS TIPSMARK ET AL: "Experimental demonstration of a Hadamard gate for coherent state qubits", ARXIV.ORG, CORNELL UNIVERSITY LIBRARY, 201 OLIN LIBRARY CORNELL UNIVERSITY ITHACA, NY 14853, 5. Juli 2011 (2011-07-05), XP080513703, DOI: 10.1103/PHYSREVA.84.050301 * das ganze Dokument * | 1-14 | RECHERCHIERTE SACHGEBIETE (IPC) H04L H04B G06N |

Der vorliegende Recherchenbericht wurde für alle Patentansprüche erstellt

| Recherchenort | Abschlußdatum der Recherche | Prüfer |
|---|---|---|
| München | 13. Oktober 2021 | Kopp, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7135700 B2
- US 20130266328 A1

**In der Beschreibung aufgeführte Nicht-Patentliteratur**

- **D.BOUWMEESTER et al.** Observation of three-photon Greenberger-Horne-Zeilinger entanglement. *Phys.Rev.Lett.,* 1999, vol. 82, 1345
- **D.BRUß et al.** Approximate quantum cloning and the impossibility of superluminal information transfer. *Phys. Rev.,* 2000, vol. A 62, 062302
- **D.BURCHARDT.** A Rigorous Test of Bell's Inequality and Quantum Teleportation Employing Single Atomes. Dissertation an der Ludwig-Maximilians Universität, 2017
- **S.GASPARONI et al.** Realization of a photonic CNOT gate sufficient for quantum computation. *Phys. Rev. Lett.,* 2004, vol. 93, 020504
- **M. GIUSTINA et al.** Significant-Loophole-Free Test of Bell's Theorem with Entangled Photons. *Phys. Rev. Lett.,* 2015, vol. 115, 250401
- **D. M. GREENBERGER ; M. A. HORNE ; A. SHIMONY.** A. Zeilinger: Bell's theorem without inequalities. *Am. J. Phys.,* 1990, vol. 58, 1131-1143
- **D.R. HAMEL.** Direct generation of three-photon polarization entanglement. *Nature Photonics,* 2014, vol. 8, 801-807

- **N. HERBERT.** FLASH-A superluminal communicator based upon a new kind of quantum measurement. *Found. Phys.,* 1982, vol. 12, 1171-1179
- **T.F. JORDAN.** Quantum Correlations Do Not Transmit Signals. *Phys.Lett.,* 1983, vol. 94A, 264
- Quantum information processing beyond ten ion-qubits. **T. MONZ.** dissertation. Leopold-Franzens University Innsbruck, 2011
- **M. NIELSEN ; I. CHUANG.** Quantum Computation and Quantum Information. Cambridge University Press, 2001
- **A. TIPSMARK et al.** Experimental demonstration of a Hadamard gate for coherent state qubits. *Phys.Rev.,* 2011, vol. A 84, 050301
- **G. WENDIN.** Quantum information processing with superconducting circuits: a review. *Rep. Prog. Phys.,* 2017, vol. 80, 106001
- Remarks on the Mind-Body Question. **E. WIGNER.** The Scientist Speculates. 1961, 284-302